# EUROPÄISCHE PATENTSCHRIFT

(11) **EP 3 429 878 B1**
(45) Veröffentlichungstag und Bekanntmachung des Hinweises auf die Patenterteilung: **29.01.2020**
(21) Anmeldenummer: 16713780.1
(22) Anmeldetag: 18.03.2016
(51) Int. Cl.: B60K 1/00, B60K 17/02, B60K 23/04, B60K 17/356

(54) **ELEKTROANTRIEB**
ELECTRIC DRIVE
ENTRAÎNEMENT ÉLECTRIQUE

(43) Veröffentlichungstag der Anmeldung: 23.01.2019
(73) Patentinhaber: GKN AUTOMOTIVE LTD., Redditch Worcestershire B98 0AJ (GB)
(72) Erfinder: HAUPT, Jan, 51515 Kürten (DE)
(74) Vertreter: Neumann Müller Oberwalleney & Partner Patentanwälte
(86) Internationale Anmeldenummer: PCT/EP2016/056070
(87) Internationale Veröffentlichungsnummer: WO 2017/157479

(56) Entgegenhaltungen:
- DE-A1-102012 101 984
- JP-A- 2010 241 178
- US-A1- 2014 296 028

## Beschreibung

Die Erfindung betrifft einen Elektroantrieb zum Antreiben eines Kraftfahrzeugs. Ein Elektroantrieb kann als alleiniger Antrieb für das Kraftfahrzeug dienen oder zusätzlich zu einem Verbrennungsmotor vorgesehen sein, wobei der Elektroantrieb und der Verbrennungsmotor jeweils für sich oder gemeinsam überlagert das Kraftfahrzeug antreiben können. Derartige Antriebskonzepte werden auch als "Hybridantrieb" bezeichnet.

Aus der US 2015/0119181 ist ein Elektroantrieb zum Antreiben der Hinterachse eines Kraftfahrzeugs bekannt. Der Elektroantrieb umfasst eine elektrische Maschine, ein nachgelagertes Übersetzungsgetriebe, das eine eingeleitete Drehbewegung vom Schnellen ins Langsame übersetzt, sowie ein dem Übersetzungsgetriebe nachgelagertes Differentialgetriebe, das ein eingeleitetes Drehmoment auf zwei Seitenwellen zum Antreiben der Fahrzeugräder aufteilt. Die elektrische Maschine und das Differentialgetriebe sind koaxial zueinander angeordnet.

Aus der AT 007 740 U1 ist ein elektrischer Zusatzantrieb für eine im Normalbetrieb nicht angetriebene Achse eines Kraftfahrzeugs bekannt. Der Zusatzantrieb umfasst einen Elektromotor, ein Untersetzungsgetriebe und zwei steuerbare Kupplungen, die jeweils mit einer zugehörigen Achswelle antriebsverbunden sind. Der Elektromotor ist radial beabstandet von den steuerbaren Kupplungen angeordnet.

Aus der DE 102 25 873 A1 ist eine ähnliche Antriebskraftverteilervorrichtung für ein Hybridfahrzeug bekannt. Die Vorrichtung umfasst in einer Ausführungsform einen Elektromotor, der mit radialem Abstand parallel zu den beiden Kupplungen angeordnet ist. Die beiden Kupplungen sind elektromagnetisch steuerbar. Eine Getriebewelle des Untersetzungsgetriebes ist parallel zwischen der Motorwelle des Elektromotors und den Drehachsen der Kupplungen angeordnet.

Die JP 2010-241178 zeigt einen Elektroantrieb mit einer ähnlichen Anordnung von Elektromotor, Untersetzungsgetriebe und Kupplungen.

Aus der EP 1 281 560 A2 ist ein Achsmodul mit zwei separaten Reiblamellenkupplungen bekannt. Zur Drehmomenteinleitung ist ein Winkeltrieb vorgesehen, der eine Hohlwelle drehend antreibt. Die Reiblamellenkupplungen sind an den Enden der Hohlwelle voneinander beabstandet angeordnet.

Aus der US 4 950 214 ist ein steuerbares Sperrdifferential bekannt. Das Sperrdifferential weist eine elektromotorisch mittels einer Rampenanordnung betätigbare Reiblamellenkupplung auf, die zwischen dem Differentialkorb und einem Seitenwellenrad des Differentials angeordnet ist. Die Rampenanordnung ist außerhalb des Differentialkorbs angeordnet. Zur Übertragung einer von der Rampenanordnung erzeugten Axialkraft auf das innerhalb des Differentialkorbs angeordnete Lamellenpaket erfolgt über Stößel, die den Differentialkorb durchdringen.

Bekannte elektrische Achssysteme müssen aufgrund der maximal zulässigen Drehzahl des Elektromotors und der angewandten Übersetzung bei hohen Fahrgeschwindigkeiten abgekoppelt werden, wobei allerdings noch ungewünschte Restschleppmomente an der Achse anliegen können. Dies kann zu einem negativen Einfluss auf die Gesamteffizienz des Antriebssystems, insbesondere bei hohen Geschwindigkeiten, führen.

Aufgrund eines hohen Systemgewichtes der nötigen Aggregate wie Batterie, Elektromotor und Inverter ist die Fahrdynamik eines Hybridfahrzeugs im Vergleich zu einem entsprechend konventionell angetriebenen (Allrad-) Fahrzeug deutlich beeinträchtigt, was sich in erster Linie durch ein verstärktes Untersteuern bemerkbar macht. Ferner kann die Traktion der Fahrzeuge bei Verwendung von offenen Differentialen beschränkt sein.

Hiervon ausgehend liegt der vorliegenden Erfindung die Aufgabe zugrunde, einen Elektroantrieb vorzuschlagen, mit dem sich die oben genannten Nachteile vermeiden lassen, respektive, der eine gezielt steuerbare Drehmomentverteilung auf die beiden Achswellen ermöglicht und gleichzeitig einfach und kompakt aufgebaut ist.

Eine Lösung besteht in einem Elektroantrieb zum Antreiben einer Antriebsachse eines Kraftfahrzeugs, umfassend: eine Gehäuseanordnung; eine elektrische Maschine mit einer als Hohlwelle ausgebildeten Motorwelle, die in der Gehäuseanordnung um eine Drehachse drehbar gelagert ist; eine Getriebeeinheit mit einer Getriebewelle, die von der Motorwelle drehend antreibbar ist und um eine zur Drehachse parallele Drehachse in der Gehäuseanordnung drehbar gelagert ist; eine Doppelkupplungseinheit mit einem von der Getriebewelle drehend antreibbaren Kupplungskorb, einem ersten Lamellenpaket und einer ersten Kupplungsnabe zum Antreiben einer ersten Ausgangswelle, sowie einem zweiten Lamellenpaket und einer zweiten Kupplungsnabe zum Antreiben einer zweiten Ausgangswelle, wobei eine der beiden Ausgangswellen sich durch die Hohlwelle der elektrischen Maschine hindurch erstreckt; wobei der Kupplungskorb in der Gehäuseanordnung koaxial zur Drehachse der Motorwelle drehbar gelagert ist und einen Mantelabschnitt aufweist, der einen Aufnahmeraum für das erste und zweite Lamellenpaket bildet, sowie einen ersten Deckelabschnitt und einen zweiten Deckelabschnitt, die den Aufnahmeraum des Kupplungskorbs seitlich begrenzen und jeweils einen Hülsenansatz zur Lagerung des Kupplungskorbs in der Gehäuseanordnung aufweisen; einen ersten Aktuator zum Beaufschlagen des ersten Lamellenpakets, wobei der erste Aktuator außerhalb des Kupplungskorbs angeordnet ist und an der Gehäuseanordnung in einer ersten Richtung axial abgestützt ist, wobei ein erstes Kraftübertragungsglied vorgesehen ist, um eine vom Aktuator erzeugte Axialkraft auf das im Kupplungskorb angeordnete erste Lamellenpaket zu übertragen, wobei der erste Deckelabschnitt mehrere umfangsverteilte erste Durchtrittsöffnungen aufweist, durch die sich Nocken des ersten Kraftübertragungsglieds hindurch erstrecken; einen zweiten Aktuator zum Beaufschlagen des zweiten Lamellenpakets, wobei der zweite Aktuator außerhalb des Kupplungskorbs angeordnet ist und an der Gehäuseanordnung in einer zweiten Richtung axial abgestützt ist, wobei ein zweites Kraftübertragungsglied vorgesehen ist, um eine vom Aktuator erzeugte Axialkraft auf das im Kupplungskorb angeordnete zweite Lamellenpaket zu übertragen, wobei der zweite Deckelabschnitt mehrere umfangsverteilte zweite Durchtrittsöffnungen aufweist, durch die sich Nocken des zweiten Kraftübertragungsglieds hindurch erstrecken; wobei der erste Aktuator und der zweite Aktuator unabhängig voneinander mittels einer Steuereinheit steuerbar sind, so dass ein vom ersten Lamellenpaket auf die erste Kupplungsnabe übertragbares erstes Drehmoment und ein vom zweiten Lamellenpaket auf die zweite Kupplungsnabe übertragbares zweites Drehmoment unabhängig voneinander variabel einstellbar sind.
Ein Vorteil des Elektroantriebs besteht darin, dass mittels der Doppelkupplungsanordnung eine variable Drehmomentverteilung auf die beiden Ausgangswellen ermöglicht wird. Ein Differentialgetriebe zur Drehmomentverteilung auf die beiden Ausgangswellen ist nicht erforderlich. Je nach Fahrzustand kann das Drehmoment am kurveninneren beziehungsweise kurvenäußeren Rad individuell eingestellt werden, was insgesamt zu einer verbesserten Fahrdynamik, respektive Fahrstabilität führt. Dieses Steuerungsprinzip wird auch als aktive Momentenverteilung oder "Torque Vectoring" bezeichnet. Ein weiterer Vorteil liegt in der kompakten Bauweise des Elektroantriebs. Aufgrund der gezielt steuerbaren Verteilung des Drehmoments zwischen den Fahrzeugrädern bietet der Elektroantrieb die Möglichkeit der aktiven Momentenverteilung (Torque Vectoring) an der elektrisch angetriebenen Antriebsachse, insbesondere der Hinterachse. Dabei wird bei Kurvenfahrt das kurvenäußeren Rad mit mehr Drehmoment als das kurveninnere Rad beaufschlagt. Dies kann im Rahmen einer fahrdynamischen Abstimmung des Fahrzeugs gezielt ausgenutzt werden, um eine ungewollte Neigung des Fahrzeuges zum Untersteuern durch ein positives Giermoment abzumindern. Des Weiteren kann die Fahrzeugdynamik durch einen gesteuerten Drehzahlunterschied zwischen der Vorderachse und der elektrisch angetriebenen Hinterachse positiv beeinflusst werden. Als weitere Funktion bietet der Elektroantrieb die Möglichkeit, die Antriebsachse zu sperren. Vergleichbar zu einem Sperrdifferential können die beiden Fahrzeugräder durch synchrones Ansteuern der Kupplungen miteinander verbunden werden. Dies führt zu einer deutlich verbesserten Traktion und kann im oberen Geschwindigkeitsbereich zu einer Gierdämpfung genutzt werden.

Nach einer möglichen Ausführungsform weist der Kupplungskorb an seiner äußeren Umfangsfläche ein Ringrad auf, das mit einem Abtriebsrad der Getriebewelle in Eingriff ist. Das Ringrad ist vorzugsweise fest mit dem Kupplungskorb verbunden und kann insbesondere einteilig mit dem Kupplungskorb gestaltet sein. Vorzugsweise weisen das Ringrad und das hiermit kämmende Abtriebsrad Schrägverzahnungen auf. Durch die Ausgestaltung des Kupplungskorbs mit seitlichen Deckelteilen können von der Schrägverzahnung auf den Kupplungskorb einwirkende Axialkräfte besonders gut weitergeleitet und gegen das Gehäuse axial abgestützt werden.

Nach einer für einen kompakten Aufbau vorteilhaften Ausgestaltung weist die Getriebeeinheit genau eine Getriebewelle und insbesondere zwei Zahnradpaarungen auf. Dabei bilden das Antriebsrad der Motorwelle und das hiermit kämmende Antriebsrad der Getriebewelle eine erste Zahnradpaarung. Ferner bilden das Abtriebsrad der Getriebewelle und das hiermit kämmende Ringrad die zweite Zahnradpaarung. Es ist insbesondere vorgesehen, dass ein Gesamtübersetzungsverhältnis der Getriebeeinheit zwischen 8 und 10 liegt. Beispielsweise kann in Konkretisierung ein erstes Übersetzungsverhältnis der ersten Zahnradpaarung zwischen 3,0 und 4,0 liegen und ein zweites Übersetzungsverhältnis der zweiten Zahnradpaarung zwischen 2,5 und 3,5. Das Untersetzungsgetriebe ist ausgestaltet, um eine Übersetzung ins Langsame zu erzeugen. Somit dreht das Eingangsteil der Doppelkupplungseinheit um ein Vielfaches langsamer als die Motorwelle des Elektromotors. Die Doppelkupplungseinheit teilt das eingeleitete Drehmoment auf die beiden Ausgangswellen auf, die zum Antreiben eines zugehörigen Fahrzeugrads dienen.

Für einen kompakten Aufbau kann insbesondere vorgesehen sein, dass ein zwischen der Drehachse der Getriebewelle und der Drehachse der Motorwelle gebildeter radialer Abstand, kleiner ist als das 0,9-fache des größten Radius der elektrischen Maschine, insbesondere kleiner als das 0,8-fache des Radius. Mit dieser Ausgestaltung liegt die Getriebewelle, in Axialansicht, deutlich innerhalb einer Einhüllenden der elektrischen Maschine, so dass insgesamt ein radial kompakter Aufbau des Elektroantriebs erreicht wird.

Vorzugsweise ist ein erstes Kupplungslager zur Lagerung des ersten Deckelabschnitts des Kupplungskorbs und ein zweites Kupplungslager zur Lagerung des zweiten Deckelabschnitts des Kupplungskorbs vorgesehen, wobei ein Außendurchmesser des ersten Kupplungslagers kleiner ist als ein Innendurchmesser des ersten Aktuators und/oder wobei ein Außendurchmesser des zweiten Kupplungslagers kleiner ist als ein Innendurchmesser des zweiten Aktuators. Mit anderen Worten liegt zumindest eines der beiden Kupplungslager radial innerhalb des dieser Seite zugeordneten Aktuators. Dies ermöglicht wiederum dass das Kupplungslager und der Aktuator gegebenenfalls mit axialer Überdeckung angeordnet werden können, was sich positiv auf den axialen Bauraum auswirkt. Vorzugsweise hat das erste Kupplungslager zumindest teilweise eine axiale Überdeckung mit dem ersten Aktuator und/oder hat das zweite Kupplungslager zumindest teilweise eine axiale Überdeckung mit dem zweiten Aktuator.

Für die Ausgestaltung der Aktuatoren sind verschiedene technische Möglichkeiten denkbar, beispielsweise hydraulisch, elektromotorisch oder elektromagnetisch betätigte Aktuatoren. Die ersten und zweiten Aktuatoren zum Betätigen der ersten und zweiten Kupplungen sind vorzugsweise hinsichtlich ihres Aufbaus und ihrer Funktionsweise gleich gestaltet. Sofern im Rahmen der vorliegenden Offenbarung nur ein Aktuator beschrieben wird, gelten diese Merkmale selbstverständlich auch für den anderen Aktuator. Dies soll im Übrigen auch für andere technische Komponenten gelten, von denen zwei vorgesehen sind.

Bei Ausgestaltung des ersten und/oder zweiten Aktuators in Form eines hydraulisch betätigten Aktuators kann dieser einen ringförmigen Kolben aufweisen, der in einer ringförmigen Zylinderkammer der Gehäuseanordnung axial verschiebbar einsitzt, wobei zwischen dem ringförmigen Kolben und dem ersten Betätigungsglied ein Axiallager angeordnet sein kann.

Nach einer alternativen Ausgestaltung kann der erste und/oder zweite Aktuator in Form einer elektromotorisch betätigbaren Rampenanordnung gestaltet sein und einen axial abgestützten Stützring sowie einen axial beweglichen Stellring aufweisen. Dabei ist insbesondere vorgesehen, dass einer der beiden Ringe drehfest in der Gehäuseanordnung gehalten ist und der andere der beiden Ringe drehend antreibbar ist. Die beiden Ringe sind über Rampenflächen gegeneinander axial abgestützt, gegebenenfalls unter Zwischenschaltung von Wälzkörpern, wobei die Rampenflächen derart gestaltet sind, dass ein Verdrehen des einen Rings relativ zum anderen Ring eine axiale Verschiebung des Stellrings relativ zum Stützring bewirkt. Zwischen dem Stellring und dem zugehörigen Betätigungsglied des Kupplungspakets ist vorzugsweise ein Axiallager vorgesehen, das beispielsweise in Form eines Axialnadellagers gestaltet sein kann.

Die Gehäuseanordnung des Elektroantriebs kann mehrteilig aus einzelnen Gehäuseteilen gestaltet sein, die beispielsweise über Flanschverbindungen miteinander verbunden werden können. In Konkretisierung kann die Gehäuseanordnung einen ersten Gehäuseabschnitt aufweisen, der zumindest teilweise einen ersten Aufnahmeraum für die elektrische Maschine bildet, einen zweiten Gehäuseabschnitt, der zumindest teilweise einen zweiten Aufnahmeraum für die Doppelkupplungseinheit bildet, sowie zumindest eine Zwischenwand, die zwischen dem ersten Gehäuseabschnitt und dem zweiten Gehäuseabschnitt angeordnet ist. Mit der Formulierung, dass zumindest teilweise ein Aufnahmeraum gebildet ist, ist gemeint, dass die jeweilige Einheit teilweise, größtenteils oder vollständig in dem zugehörigen Aufnahmeraum aufgenommen sein kann. Die Zwischenwand kann eine erste Lageraufnahmefläche zur Aufnahme eines ersten Wellenlagers für die Motorwelle sowie eine zweite Lageraufnahmefläche zur Aufnahme eines zweiten Wellenlagers für die Getriebewelle aufweisen, wobei insbesondere vorgesehen ist, dass ein radialer Abstand zwischen der ersten Lageraufnahmefläche und der zweiten Lageraufnahmefläche kleiner als das 2,0-fache der radialen Erstreckung des ersten und/oder zweiten Wellenlagers ist, insbesondere kleiner als das 1,0-fache der radialen Erstreckung.

Die Gehäuseanordnung kann ferner eine Zwischenplatte aufweisen, die zwischen der Zwischenwand und dem zweiten Gehäuseabschnitt angeordnet ist. Vorzugsweise ist eines der beiden Kupplungslager und einer der beiden Aktuatoren in der Zwischenplatte aufgenommen beziehungsweise gegen diese axial abgestützt. Durch diese Ausgestaltung können von dem Verzahnungseingriff zwischen Getriebewelle und Kupplungskorb eingeleitete Axialkräfte gut abgestützt und in das Gehäuse eingeleitet werden.

Es ist insbesondere vorgesehen, dass zwischen der Zwischenwand und der Zwischenplatte, die auch als zweite Zwischenwand bezeichnet werden kann, ein Aufnahmeraum gebildet ist. Vorzugsweise ist die Getriebewelle in einem Lagerabschnitt der Zwischenwand drehbar gelagert, wobei das Antriebsrad der Getriebewelle hierzu axial benachbart in dem Aufnahmeraum angeordnet ist. Die Hohlwelle weist nach einer möglichen Ausgestaltung einen mit einem Rotor der elektrischen Maschine verbundenen Wellenabschnitt, einen in der Zwischenwand drehbar gelagerten Lagerabschnitt und das Antriebsrad auf. Das Antriebsrad kann an einem freien Ende der Hohlwelle angeformt beziehungsweise mit dieser auf andere Weise fest verbunden sein und in den zwischen der Zwischenwand und der Zwischenplatte gebildeten Aufnahmeraum frei hineinragen.

Eine besondere Herausforderung an eine kompakte Anordnung stellt auch die Beölung des Elektroantriebs dar.

Nach einer Ausführungsform kann zwischen der Hohlwelle und der sich durch die Hohlwelle erstreckenden Ausgangswelle ein Ringkanal gebildet sein, mit einer der Getriebeeinheit zugewandten ersten Mündung und einer von der Getriebeeinheit entfernten zweiten Mündung. Die Zwischenplatte der Gehäuseanordnung weist vorzugsweise eine Durchtrittsöffnung auf, durch die sich die Ausgangswelle hindurch erstreckt, wobei zwischen der Ausgangswelle und der Zwischenplatte ein Ringspalt gebildet ist. Durch den Ringspalt kann Schmiermittel aus dem Aufnahmeraum der Doppelkupplungseinheit in den Ringkanal fließen, um von dort zu entfernt liegenden drehenden Bauteilen des Elektroantriebs zu gelangen.

Die Zwischenwand kann einen zur Drehachse koaxialen und sich in axialer Richtung erstreckenden Hülsenansatz aufweisen, welcher in eine stirnseitige Ausnehmung der Hohlwelle mit axialer Überdeckung eingreift. Der Hülsenansatz und die Hohlwelle können sich in axiale Richtung unter Ausbildung eines kleinen Spalts überlappen. Durch die axiale Überdeckung des Hülsenansatzes mit der stirnseitigen Ausnehmung der Hohlwelle wird eine Labyrinthdichtung gebildet, welche verhindert, dass in Richtung Ringkanal strömendes Schmiermittel durch den zwischen dem ortsfesten Hülsenansatz und der drehenden Hohlwelle gebildeten Spalt vor der Einmündung in den Ringkanal nach radial außen entflieht.
Die durch die Hohlwelle durchgesteckte Ausgangswelle hat einen von der Getriebeeinheit entfernten zweiten Endabschnitt, der in einem Lageraufnahmeteil der Gehäuseanordnung mittels eines Wellenlagers um die Drehachse drehbar gelagert ist. Die Hohlwelle erstreckt sich vorzugsweise axial bis in das Lageraufnahmeteil hinein, das heißt ein Endabschnitt der Hohlwelle liegt in axialer Überdeckung mit dem Lageraufnahmeteil. Die drehend antreibbare Hohlwelle ist gegenüber dem ortsfesten Lageraufnahmeteil mittels einer Drehdichtung abgedichtet, die als Radialwellendichtring gestaltet sein kann. Vorzugsweise befindet sich das stirnseitige Ende der Hohlwelle, das heißt die Ausgangsmündung des Ringkanals, axial zwischen der Drehdichtung und dem Wellenlager für die Ausgangswelle, so dass diese Bauteile gut geschmiert werden. Seitlich benachbart zum Wellenlager kann eine weitere Drehdichtung vorgesehen sein, mit welcher der Ringraum zwischen der Ausgangswelle und dem Lageraufnahmeteil abgedichtet ist.
Ein bevorzugtes Ausführungsbeispiel wird nachstehend anhand der Zeichnungsfiguren erläutert. Hierin zeigt
- Figur 1: schematisch einen erfindungsgemäßen Elektroantrieb im Längsschnitt;
- Figur 2: ein Detail des Elektroantriebs aus Figur 1 in vergrößerter Darstellung; und
- Figur 3: den Mündungsbereich aus Figur 2 als Detail in vergrößerter Darstellung.

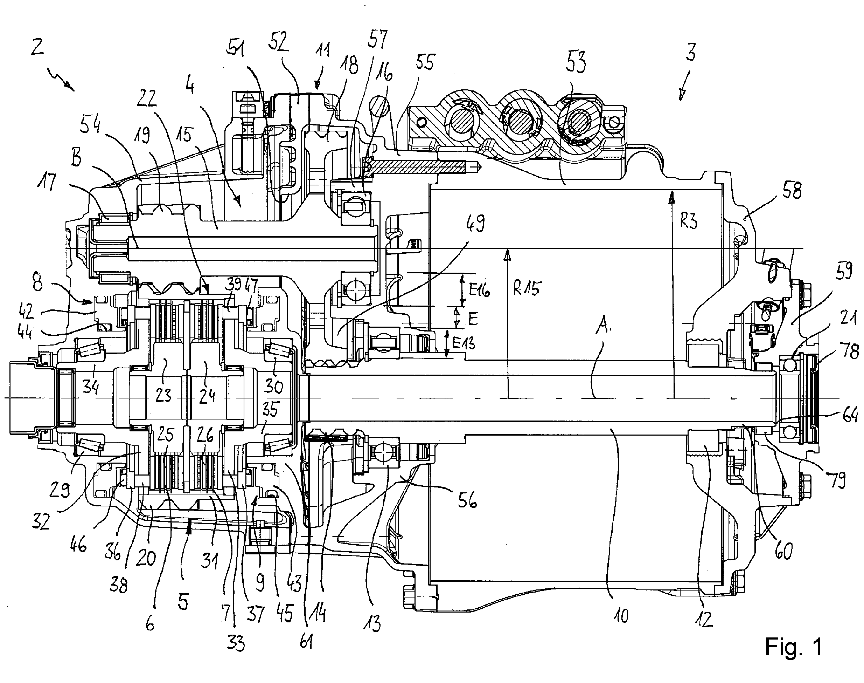

Die Figuren 1 bis 3 werden nachstehend gemeinsam beschrieben. Figur 1 zeigt einen erfindungsgemäßen Elektroantrieb 2 mit einer elektrischen Maschine 3 und einer von der elektrischen Maschine 3 drehend antreibbaren Getriebeeinheit 4 und ein von der Getriebeeinheit 4 drehend antreibbare Doppelkupplungseinheit 5 mit zwei separat steuerbaren Reibungskupplungen 6, 7, die jeweils von einem zugehörigen Aktuator 8,9 betätigbar sind.

Der Elektroantrieb 2 ist ausgestaltet, um eine Antriebsachse eines Kraftfahrzeugs als alleiniger Antrieb dieser Antriebsachse anzutreiben. Eine weitere Antriebsachse des Kraftfahrzeugs kann von einer weiteren Antriebseinheit mit separater Antriebsquelle, beispielsweise einem Verbrennungsmotor angetrieben werden. Es ist jedoch keine mechanische Antriebsverbindung zwischen den beiden Antriebssystemen vorgesehen.
Die elektrische Maschine 3 umfasst einen Stator und einen hierzu drehbaren Rotor, der bei Bestromen der elektrischen Maschine eine Motorwelle 10 drehend antreibt. Die Drehbewegung der Motorwelle 10 wird über das im Leistungspfad nachgelagerte Getriebeeinheit 4 auf die Doppelkupplungseinheit 5 übertragen. Die elektrische Maschine 3 wird von einer Batterie (nicht dargestellt) mit elektrischem Strom versorgt. Die elektrische Maschine 3 kann im Motorbetrieb arbeiten, wobei elektrische Energie in mechanische Energie zum Antrieben der Antriebsachse umgewandelt wird, oder im Generatorbetrieb, wobei, umgekehrt, mechanische Energie in elektrische Energie umgewandelt wird, die dann in der Batterie gespeichert werden kann. Der Elektroantrieb 2 umfasst ferner eine Gehäuseanordnung 11, in dem die elektrische Maschine 3, die Getriebeeinheit 4 und die Doppelkupplungseinheit 5 angeordnet sind.
Die Getriebeeinheit 4 ist in Form eines Untersetzungsgetriebes gestaltet, das eine von der Motorwelle 10 eingeleitete Drehbewegung vom Schnellen ins Langsame übersetzt. Somit dreht ein Eingangsteil der Doppelkupplungseinheit 5 um ein Vielfaches langsamer als die Motorwelle 10 der elektrischen Maschine 3. Die Doppelkupplungseinheit 5 teilt das eingeleitete Drehmoment auf die beiden Seitenwellen 27, 28 auf, die zum Antreiben eines zugehörigen Fahrzeugrads dienen. Die Motorwelle 10 ist als Hohlwelle gestaltet und mittels Lager 12, 13 in der Gehäuseanordnung 11 des Elektroantriebs 2 um eine Drehachse A drehbar gelagert. Ein Antriebsrad 14 (erstes Zahnrad) ist drehfest mit der Antriebswelle 10 verbunden, insbesondere einteilig mit dieser gestaltet.
Das Untersetzungsgetriebe 4 umfasst eine Getriebewelle 15, die über Lager 16, 17 um eine zur ersten Drehachse A parallele zweite Drehachse B in der Gehäuseanordnung 11 drehbar gelagert ist und auch als Zwischenwelle bezeichnet werden kann. Die Getriebewelle 15 umfasst ein Antriebsrad 18 (zweites Zahnrad) und ein Abtriebsrad 19 (drittes Zahnrad), die drehfest mit der Getriebewelle verbunden sind, insbesondere einteilig mit dieser ausgestaltet sind. Das Abtriebsrad 19 kämmt mit einem Ringrad 20 (viertes Zahnrad) zum Antreiben der Doppelkupplungseinheit 5. Das Ringrad 20 ist fest mit dem Eingangsteil 22 der Doppelkupplungseinheit 5 verbunden und kann beispielsweise einteilig mit diesem ausgestaltet sein, wobei andere Verbindungen wie eine stoffschlüssige Verbindung mittels Schweißen und/oder eine kraftschlüssige Verbindung mittels Schrauben ebenfalls möglich sind. Es ist vorgesehen, dass das Abtriebsrad 19 der Getriebewelle 15 und das Ringrad 20 des Kupplungseingangsteils Schrägverzahnungen aufweisen.

Es ist erkennbar, dass das Untersetzungsgetriebe 4 genau eine Getriebewelle 15 und zwei Zahnradpaarungen aufweist. Das Antriebsrad 14 der Motorwelle 10 und das hiermit kämmende Antriebsrad 18 der Getriebewelle 15 bilden eine erste Zahnradpaarung des Übersetzungsgetriebes 5 mit einem ersten Übersetzungsverhältnis i1. Das Abtriebsrad 19 der Getriebewelle 15 und das hiermit kämmende Ringrad 20 bilden eine zweite Zahnradpaarung i2. Das Motorwellen-Antriebsrad 14 hat einen wesentlich kleineren Durchmesser beziehungsweise eine geringere Zähnezahl als der Durchmesser beziehungsweise die Zähnezahl des Getriebewellen-Antriebsrads 18. Auf diese Weise wird eine Übersetzung ins Langsame erzeugt. Ebenso hat das Getriebewellen-Abtriebsrad 19 einen kleineren Durchmesser beziehungsweise eine geringere Zähnezahl als das Ringrad 20, so dass hier eine weitere Übersetzung ins Langsame erfolgt. Das Untersetzungsgetriebe 4 ist insbesondere so gestaltet, dass ein Gesamtübersetzungsverhältnis zwischen Motorwelle 10 und Kupplungseingang 22 zwischen 8,0 und 10,0 liegt. Beispielsweise kann in Konkretisierung das erste Übersetzungsverhältnis i1 der ersten Zahnradpaarung 14, 18 zwischen 3,0 und 4,0 liegen und das zweite Übersetzungsverhältnis i2 der zweiten Zahnradpaarung 19, 20 zwischen 2,5 und 3,5.

Konstruktiv ist die Zwischenwelle 15 radial verhältnismäßig nah an der Motorwelle 10 angeordnet. Dabei ist insbesondere vorgesehen, dass der zwischen der Drehachse B der Getriebewelle 15 und der Drehachse A der Motorwelle 10 gebildete radiale Abstand R15, kleiner ist als das 0,9-fache des größten Radius R3 der elektrischen Maschine 3 ist, insbesondere kleiner als das 0,8-fache des Radius R3. Mit dieser Ausgestaltung liegt die Getriebewelle 15 (ohne Antriebsrad 18), in Axialansicht, deutlich innerhalb einer Einhüllenden der elektrischen Maschine, so dass insgesamt ein radial kompakter Aufbau des Elektroantriebs erreicht wird.

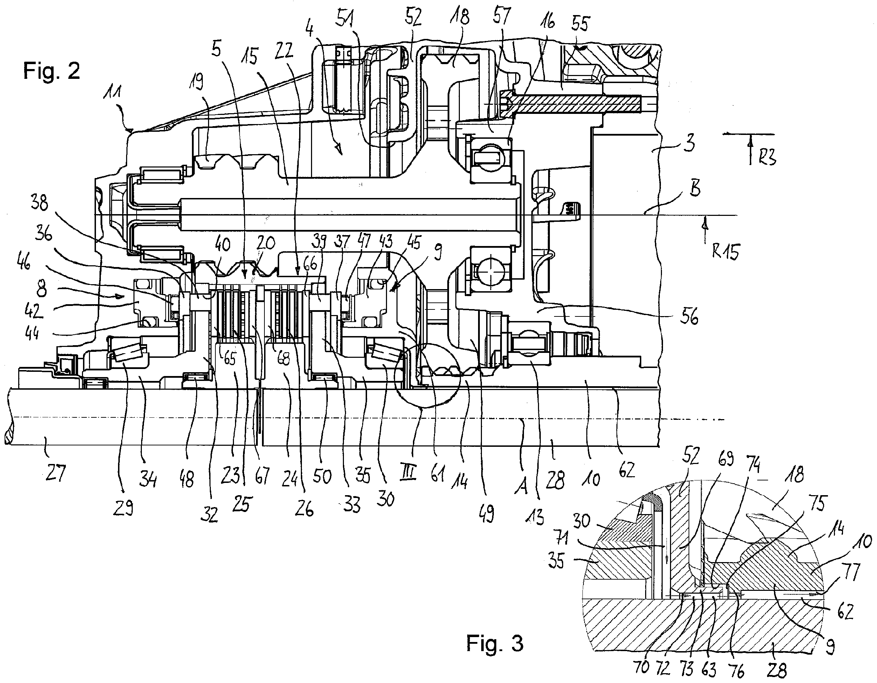

Die Doppelkupplungseinheit 5 weist einen von der Getriebewelle 15 drehend antreibbaren Kupplungskorb 22 als Eingangsteil auf sowie zwei Kupplungsnaben 23, 24 als Kupplungsausgangsteile, auf die über jeweils ein Lamellenpaket 25, 26 Drehmoment von dem Kupplungskorb 22 auf die jeweilige Kupplungsnabe 23, 24 übertragbar ist. Die Lamellenpakete 25, 26 umfassen jeweils mit dem Kupplungskorb 22 drehfest und axial bewegliche Außenlamellen sowie mit der Kupplungsnabe 23, 24 drehfest und axial bewegliche Innenlamellen, die axial abwechselnd angeordnet sind. Die beiden Kupplungen sind hinsichtlich ihres Aufbaus, insbesondere ihrer geometrischen Abmessungen wie Nabenaußendurchmesser, Nabeninnendurchmesser, Durchmesser der Außen- und Innenlamellen, gleich gestaltet. Die erste Kupplungsnabe 23 ist mit einer ersten Ausgangswelle 27 antriebsmäßig verbunden und die zweite Kupplungsnabe 24 mit einer zweiten Ausgangswelle 28. Es ist in Figur 2 erkennbar, dass sich die zweite Ausgangswelle 28 durch die Hohlwelle 10 der elektrischen Maschine 3 hindurch erstreckt. Die Doppelkupplungseinheit 5 ist koaxial zur elektrischen Maschine 3 angeordnet. Konkret ist der Kupplungskorb 22 mittels zweier Kupplungslager 29, 30 in der Gehäuseanordnung 11 koaxial zur Drehachse A der Motorwelle 9 drehbar gelagert.

Der Kupplungskorb 22 umfasst einen Mantelabschnitt 31, der auch als Hülsen- oder Zylinderabschnitt bezeichnet werden kann, sowie zwei mit dem Mantelabschnitt verbundene und diesen seitlich begrenzende Deckelabschnitte 32, 33. Gemäß der hier vorliegenden Ausführungsform ist der Kupplungskorb dreiteilig aufgebaut, wobei die der Mantelabschnitt 31 sowie die Deckelabschnitte 32, 33 als separate Bauteile hergestellt sind und nachträglich fest miteinander verbunden sind, insbesondere mittels Schweißen. Insofern können der Mantelabschnitt 31 auch als Mantelteil und die Deckelabschnitte 32, 33 auch als Deckelteile bezeichnet werden. Die Deckelabschnitte 32, 33 haben jeweils einen einstückig angeformten Hülsenansatz 34, 35 zur Aufnahme eines zugehörigen Kupplungslager 29, 30, mit denen der Kupplungskorb im Gehäuse 11 drehbar gelagert ist.

Jede der beiden Kupplungen 6, 7 ist von einem zugehörigen Aktuator 8, 9 individuell betätigbar. Hierfür sind die beiden Aktuatoren 8, 9 unabhängig voneinander mittels einer Steuereinheit (nicht dargestellt) steuerbar, so dass ein vom ersten Lamellenpaket 25 auf die erste Kupplungsnabe 23 übertragbares erstes Drehmoment und ein vom zweiten Lamellenpaket 26 auf die zweite Kupplungsnabe 24 übertragbares zweite Drehmoment unabhängig voneinander variabel einstellbar sind. Die beiden Aktuatoren 8, 9 sind hinsichtlich ihres Aufbaus und Funktionsweise gleich gestaltet, weswegen nachstehend beide gemeinsam beschrieben werden. Alle für einen Aktuator beschriebenen Merkmale gelten entsprechend auch für den anderen Aktuator. Die beiden Aktuatoren 8, 9 sind jeweils außerhalb des Kupplungskorbs 22 angeordnet und an der Gehäuseanordnung 11 in entgegengesetzte axiale Richtungen axial abgestützt.

Je Kupplung 6, 7 ist ein Kraftübertragungsglied 36, 37 vorgesehen ist, um eine vom Aktuator erzeugte Axialkraft auf das im Kupplungskorb 22 angeordnete zugehörige Lamellenpaket 25, 26 zu übertragen. Die Kraftübertragungsglieder 36, 37 umfassen einen scheibenförmigen Grundkörper, von dem mehrere Nocken 38, 39 in axiale Richtung abstehen, die auch als Vorsprünge bezeichnet werden können. Die beiden Deckelabschnitte 32, 33 haben jeweils mehrere umfangsverteilte axiale Durchtrittsöffnungen 40, 41, durch die sich Nocken 38, 39 des zugehörigen Kraftübertragungsglieds 36, 37 hindurch erstrecken. Die Nocken 38, 39 sind jeweils mit dem zugehörigen scheibenförmigen Grundkörper fest verbunden, insbesondere einteilig mit diesem gestaltet, beispielsweise mittels eines Umformverfahrens. Die Kraftübertragungsglieder 36, 37 sind über die in die Öffnungen der Deckelteile eingreifenden Nocken 38, 39 drehfest mit dem Kupplungskorb verbunden, so dass sie gemeinsam mit diesem um die Drehachse A rotieren. Gleichzeitig sind die Kraftübertragungsglieder 36, 37 gegenüber dem Kupplungskorb 22 axial beweglich, um eine axiale Stellkraft der außerhalb des Kupplungskorbs 22 liegenden Aktuatoren 8, 9 auf die in dem Kupplungskorb 22 angeordneten Lamellenpakete 25, 26 zu übertragen. Die Nocken 38, 39 wirken jeweils auf eine in dem Kupplungskorb 22 angeordnete Druckplatte 65, 66 ein welche die Kraft auf das jeweilige Lamellenpaket 25, 26 überträgt. Axial innen sind die Lamellenpakete 25, 26 jeweils über eine Stützplatte 67, 68 gegen einen mit dem Kupplungskorb 22 verbundenen Sicherungsring axial abgestützt.

Die Aktuatoren 8, 9 sind vorliegend als hydraulisch betätigbare Aktuatoren gestaltet und umfassen jeweils einen ringförmigen Kolben 42, 43, der in einer zugehörigen ringförmigen Zylinderkammer 44, 45 der Gehäuseanordnung 11 axial verschiebbar einsitzt. Über hier nicht dargestellte Ölkanäle kann mittels einer Hydraulikpumpe in der Hydraulikkammer 44, 45 ein hydraulischer Druck erzeugt werden, so dass der hierin einsitzende Kolben 42, 43 axial in Richtung Kupplungskorb 22 bewegt wird. Axialkraft wird über ein Axiallager 46, 47 auf das jeweilige Kraftübertragungsglied 36, 37 übertragen. Die Axiallager 46, 47 dienen zur drehmäßigen Entkopplung der mit dem Kupplungskorb 22 rotierenden Kraftübertragungsglieder 36, 37 gegenüber den ortsfest im Gehäuse 11 angeordneten Aktuatoren beziehungsweise Kolben 42, 43. Zur Rückstellung der Aktuatoren 8, 9 können hier nicht dargestellte Rückstellfedern vorgesehen sein. Diese können beispielsweise zwischen dem Kupplungskorb 22 und dem zugehörigen Kraftübertragungsglied 36, 37 angeordnet sind, um dieses bei unbetätigtem Aktuator von dem Kupplungskorb 22 axial weg zu beaufschlagen.

Die Aktuatoren 8, 9 sind radial außerhalb der beiden Kupplungslager 29, 30 angeordnet. Das heißt, ein Außendurchmesser des ersten beziehungsweise zweiten Kupplungslagers 29, 30 ist kleiner ein Innendurchmesser des ersten beziehungsweise zweiten Aktuators 8, 9. Die Lamellenpakete 25, 26 liegen im Verhältnis zu den Lagern 29, 30 auf einem relativ großen Durchmesser. Konkret ist vorgesehen, dass ein kleinster Innendurchmesser des ersten und/oder zweiten Lamellenpaketes 25, 26 größer ist als ein größter Außendurchmesser eines Lagerinnenrings des ersten und/oder zweiten Kupplungslagers 29, 30. Ferner ist ein mittlerer Durchmesser der Lamellenpakete 25, 26 größer als ein größter Durchmesser des ersten und/oder zweiten Lagers 29, 30. Die beiden Lager 29, 30 sind insbesondere als Kegelrollenlager gestaltet, so dass sie Axialkräfte gut abstützen und in das Gehäuse 11 einleiten können. Die auf die Lamellenpakete 25, 26 einwirkenden Kraftübertragungsglieder 38, 39 liegen zumindest größtenteils radial außerhalb des mittleren Durchmessers der Lamellenpakete 25, 26. Es ist ferner vorgesehen, dass das erste Kupplungslager 29 zumindest teilweise eine axiale Überdeckung mit dem ersten Aktuator 8 hat beziehungsweise, dass das zweite Kupplungslager 30 zumindest teilweise eine axiale Überdeckung mit dem zweiten Aktuator 9 hat.

Die erste Kupplungsnabe 23 ist mit der ersten Ausgangswelle 27 drehfest verbunden, die eingeleitetes Drehmoment über ein Gleichlaufgelenk auf eine erste Seitenwelle (nicht dargestellt) übertragen kann. Die zweite Kupplungsnabe 24 ist mit der zweiten Ausgangswelle 28 drehfest verbunden. Die beiden Kupplungsnaben 23, 24 sind axial gegeneinander und gegenüber dem Kupplungskorb 22 abgestützt. Die Ausgangswelle 28 hat einen getriebeseitigen ersten Endabschnitt 37, der mit der Kupplungsnabe 24 drehfest verbunden ist. Die Kupplungsnaben 23, 24 sind mittels Lagern 48, 50 gegenüber dem Kupplungskorb 22 um die Drehachse A drehbar gelagert. Hierfür haben die Kupplungsnaben 23, 24 jeweils einen nach axial außen abstehenden Hülsenansatz. Zwischen einer Außenfläche des Hülsenansatzes und einer Innenfläche des jeweiligen Deckelteils 32, 33 sitzt jeweils eines der Lager 48, 50 ein. Die Ausgangswelle 28 hat ferner einen vom Getriebe entfernt liegenden Endabschnitt, der mittels eines Lagers 21 in der Gehäuseanordnung 11 um die Drehachse A drehbar gelagert ist. An dem außenliegenden Endabschnitt kann ein Gleichlaufgelenk angeschlossen werden, das zur Drehmomentübertragung auf eine zweite Seitenwelle (nicht dargestellt) des Kraftfahrzeugs unter Winkelbewegung dient.

Es ist in Figur 1 erkennbar, dass die Gehäuseanordnung 11 aus mehreren einzelnen Gehäuseteilen zusammengesetzt ist. Insbesondere umfasst die Gehäuseanordnung 11 einen ersten Gehäuseabschnitt 53, in dem der Elektromotor 3 aufgenommen ist, und einen zweiten Gehäuseabschnitt 54, in dem die Getriebeeinheit 4 aufgenommen ist, sowie eine erste Zwischenwand 55 und eine zweite Zwischenwand 52 auf, die zwischen dem ersten und zweiten Gehäuseabschnitt 53, 54 angeordnet und mit diesen fest verbunden sind. Die erste Zwischenwand 55 weist einen ersten Lageraufnahmeabschnitt 56 auf, in dem die Hohlwelle 10 mittels des Lagers 13 um die Drehachse A drehbar gelagert ist, sowie einen zweiten Lageraufnahmeabschnitt 57, in dem die Getriebewelle 15 mittels des Lagers 16 um die Drehachse B drehbar gelagert ist. Es ist insbesondere vorgesehen, dass ein radialer Abstand E zwischen der ersten Lageraufnahmefläche und der zweiten Lageraufnahmefläche kleiner als das 2,0-fache der radialen Erstreckung E13, E16 des ersten beziehungsweise zweiten Wellenlagers 13, 16 ist. Dies trägt zu einer radial kompakten Bauform des Elektroantriebs bei.

Axial zwischen der ersten Zwischenwand 55 und der zweiten Zwischenwand 52 ist ein Aufnahmeraum 49 gebildet, in dem die Antriebsräder 14, 18 aufgenommen sind. Die zweite Zwischenwand 52, die insbesondere schmaler als die erste Zwischenwand 55 ausgestaltet ist und insofern auch als Zwischenplatte bezeichnet werden kann, hat einen Lageraufnahmeabschnitt 61, in dem das Lager 30 zur drehbaren Lagerung des Kupplungskorbs 22 aufgenommen ist, sowie eine Durchgangsöffnung 51, durch welche die Getriebewelle 15 hindurchgeführt ist. Die Durchgangsöffnung 51 hat einen größeren Innendurchmesser als der Außendurchmesser des Zahnrads 19, so dass die Getriebewelle 15 mit Zahnrad 19 durch die Öffnung 51 montiert werden kann.
An dem von der Getriebeeinheit 4 entfernt liegenden Ende hat die Gehäuseanordnung 11 ein Deckelteil 58 in dem das Lager 12 für die Hohlwelle 10 aufgenommen ist, sowie ein hiermit verbundenes Lageraufnahmeteil 59, in dem das Lager 21 für die Ausgangswelle 28 aufgenommen ist. Die Hohlwelle 10 hat einen ersten Endabschnitt 60, der mittels des Wellenlagers 12 in dem Gehäuseteil 58 drehbar gelagert ist, einen mit dem Rotor drehfest verbundenen Wellenabschnitt, einen in dem Lageraufnahmeabschnitt 56 der ersten Zwischenwand 55 drehbar gelagerten Abschnitt und das Antriebsrad 14, das in den zwischen den beiden Zwischenwänden 52, 55 gebildeten Aufnahmeraum 49 hineinragt.
Wie insbesondere in den Figuren 2 und 3 erkennbar, ist zwischen der Hohlwelle 10 und der Ausgangswelle 28 ein Ringkanal 62 gebildet, der eine der Getriebeeinheit 4 zugewandten erste Mündung 63 und eine von der Getriebeeinheit entfernt liegende zweite Mündung 64 aufweist. Die Gehäuseanordnung 11 kann eine Schmiermittelleitgeometrie aufweisen, die ausgestaltet ist, um Schmiermittel aus der Getriebeeinheit 4 in den Mündungsbereich der ersten Mündung 63 zu leiten. Das Schmiermittel kann somit durch die zwischen Hohlwelle 10 und Ausgangswelle 28 gebildete Öffnung hinein und entlang des Ringkanals 62 zur zweiten Mündung 64 fließen. Auf diese Weise wird es ermöglicht, auch von der Getriebeeinheit 4 entfernt liegende Teile der Antriebsanordnung 2 mit Schmiermittel zu versorgen.
Die Zwischenwand 52 kann an der dem Kupplungskorb 22 zugewandten Seite eine Schmiermittelkammer aufweisen, in die Schmiermittel temporär aufgenommen werden kann. Radial innen ist ein Durchtrittskanal 71 vorgesehen, welcher mit einem ersten Ende mit der Kammer verbunden ist und mit einem zweiten Ende zu einem radial innen liegenden Ringabschnitt 69 der Zwischenwand 52 führt. Die Fließrichtung des Schmiermittels ist in Figur 3 mit Pfeilen gekennzeichnet.

Die Zwischenwand 52 hat eine Durchgangsöffnung 70, durch welche die Ausgangswelle 28 hindurchgeführt ist. Der Innendurchmesser der Durchgangsöffnung 70 ist größer als der Außendurchmesser der Welle 28 in diesem Abschnitt, so dass zwischen der Welle und der Zwischenwand eine Ringöffnung 72 gebildet ist, durch welche das Schmiermittel in Richtung Hohlwelle 10 beziehungsweise Ringkanal 62 fließen kann. Es ist insbesondere in Figur 3 erkennbar, dass die Zwischenwand 52 radial innen einen zur Drehachse A koaxialen Hülsenansatz 73 aufweist, der sich in axiale Richtung in eine stirnseitige Ausnehmung 74 der Hohlwelle 10 hineinerstreckt. Dabei hat der Hülsenansatz 73 einen Außendurchmesser, der kleiner ist als ein Innendurchmesser der stirnseitigen Ausnehmung 74. In montiertem Zustand überlappen sich der Hülsenansatz 73 und die Hohlwelle 10 in axialer Richtung, wobei zwischen den beiden Bauteilen ein L-förmiger Spalt im Halblängsschnitt gebildet ist. Der zwischen der Zwischenwand 52 und der Hohlwelle 10 gebildete Spalt 75 kann eine Breite von beispielsweise zwischen 0,1 und 0,5 Millimeter aufweisen. Durch das axiale Ineinandergreifen des Hülsenansatzes 73 und der Hohlwelle 10 wird eine Labyrinthdichtung gebildet, so dass der Schmiermittelstrom, welcher durch den Spalt zwischen Hülsenansatz 73 und Hohlwelle 10 fließt, gering gehalten wird. Dabei nimmt die durch den Spalt 75 gebildete Drosselwirkung mit zunehmender Länge der axialen Überdeckung zwischen Hülsenansatz 73 und Hohlwelle 10 zu. Beispielsweise kann die axiale Überdeckung zwischen 2,0 und 10 Millimeter lang sein. Durch die axiale Überdeckung beziehungsweise die damit erzeugte fluidische Drosselwirkung passiert ein größerer Schmiermittelstrom den Spalt 75 in axiale Richtung, um in den zwischen der Hohlwelle 10 und der Ausgangswelle 28 gebildeten Ringspalt 62 und von dort zu den entfernt liegenden zu schmierenden Bauteilen zu gelangen.

An dem der Zwischenwand 52 zugewandten Endabschnitt hat die Hohlwelle 10 einen nach radial innen vorstehenden Kragen 76, welcher die stirnseitige Ausnehmung beziehungsweise den Spalt 75 axial begrenzt. Der Kragen 76 hat einen Innendurchmesser, der kleiner ist als der Innendurchmesser der Ausnehmung 74 und kleiner als der Innendurchmesser des sich vom Kragen axial in Richtung zur zweiten Mündung 64 erstreckenden Abschnitts der Hohlwelle 10. Dabei ist für eine gute Schmiermittelströmung insbesondere vorgesehen, dass der Innendurchmesser des Kragens 76 dem Innendurchmesser des Hülsenansatzes 73 im Wesentlichen entspricht, beziehungsweise, dass der Ringspalt zwischen Hülsenansatz 73 und Welle 10 etwa gleich groß ist wie der Ringspalt zwischen Kragen 76 und Welle 10. Die genannten Ringspalten können beispielsweise größer als 0,5 mm, beziehungsweise kleiner als 1,5 mm sein. Der an den Kragen 76 axial anschließende Abschnitt hat einen größeren Innendurchmesser als der Innendurchmesser des Kragens 76. An dem Kragen 76 axial vorbeifließendes Schmiermittel gelangt in dem Ringkanal 62 aufgrund der Zentrifugalkraft auf einen größeren Durchmesser. Eine an der Innenwandung 77 der Hohlwelle 10 gebildete Schmiermittelsäule kann sich an dem Kragen 76 axial abstützen, so dass aufgrund von immer neu an dem Kragen 76 vorbeiströmenden Schmiermittel ein Schmiermittelstrom durch den Ringkanal 62 bis zum entfernt liegenden Ende der Hohlwelle 10 entsteht. Hier tritt das Schmiermittel aus der Mündung 64 aus und gelangt zum Lager 40 und der Wellendichtung 78.

### Bezugszeichenliste

- 2: Elektroantrieb
- 3: Elektromotor
- 4: Getriebeeinheit
- 5: Kupplungseinheit
- 6, 7: Kupplung
- 8, 9: Aktuator
- 10: Motorwelle / Hohlwelle
- 11: Gehäuseanordnung
- 12, 13: Lager
- 14: Antriebsrad (erstes Zahnrad)
- 15: Getriebewelle
- 16, 17: Lager
- 18: Antriebsrad (zweites Zahnrad)
- 19: Abtriebsrad (drittes Zahnrad)
- 20: Ringrad (viertes Zahnrad)
- 21: Lager
- 22: Kupplungskorb
- 23, 24: Kupplungsnabe
- 25, 26: Lamellenpaket
- 27: erste Ausgangswelle
- 28: zweite Ausgangswelle
- 29, 30: Kupplungslager
- 31: Mantelabschnitt
- 32: Deckelabschnitt
- 33: Deckelabschnitt
- 34, 35: Hülsenansatz
- 36, 37: Kraftübertragungsglied
- 38, 39: Nocken
- 40, 41: Durchtrittsöffnungen
- 42, 43: Kolben
- 44, 45: Zylinderkammer
- 46, 47: Axiallager
- 48: Lager
- 49: Aufnahmeraum
- 50: Lager
- 51: Durchgangsöffnung
- 52: Zwischenwand
- 53: erster Gehäuseabschnitt
- 54: zweiter Gehäuseabschnitt
- 55: Deckelteil
- 56: erster Lageraufnahmeabschnitt
- 57: zweiter Lageraufnahmeabschnitt
- 58: Deckelteil
- 59: Lageraufnahmeteil
- 60: Endabschnitt
- 61: Lageraufnahmeabschnitt
- 62: Ringkanal
- 63: erste Mündung
- 64: zweite Mündung
- 65, 66: Druckplatte
- 67, 68: Stützplatte
- 69: Ringabschnitt
- 70: Durchgangsöffnung
- 71: Durchtrittskanal
- 72: Ringöffnung
- 73: Hülsenansatz
- 74: Ausnehmung
- 75: Spalt
- 76: Kragen
- 77: Innenwandung
- 78: Wellendichtung
- A: Drehachse
- B: Drehachse

## Patentansprüche

1. Elektroantrieb zum Antreiben einer Antriebsachse eines Kraftfahrzeugs, umfassend:
eine Gehäuseanordnung (11);
eine elektrische Maschine (3) mit einer als Hohlwelle (10) ausgebildeten Motorwelle, die in der Gehäuseanordnung (11) um eine Drehachse (A) drehbar gelagert ist;
eine Getriebeeinheit (4) mit einer Getriebewelle (15), die von der Motorwelle (10) drehend antreibbar ist und um eine zur Drehachse (A) parallele Drehachse (B) in der Gehäuseanordnung (11) drehbar gelagert ist;
eine Doppelkupplungseinheit (5) mit einem von der Getriebewelle (15) drehend antreibbaren Kupplungskorb (22), einem ersten Lamellenpaket (25) und einer ersten Kupplungsnabe (23) zum Antreiben einer ersten Ausgangswelle (27), sowie einem zweiten Lamellenpaket (26) und einer zweiten Kupplungsnabe (24) zum Antreiben einer zweiten Ausgangswelle (28), wobei eine der beiden Ausgangswellen sich durch die Hohlwelle (10) der elektrischen Maschine (3) hindurch erstreckt;
wobei der Kupplungskorb (22) in der Gehäuseanordnung (11) koaxial zur Drehachse (A) der Motorwelle (10) drehbar gelagert ist und einen Mantelabschnitt (31) aufweist, der einen Aufnahmeraum für das erste und zweite Lamellenpaket bildet, sowie einen ersten Deckelabschnitt (32) und einen zweiten Deckelabschnitt (33), die den Aufnahmeraum des Kupplungskorbs (22) seitlich begrenzen und jeweils einen Hülsenansatz (34, 35) zur Lagerung des Kupplungskorbs (22) in der Gehäuseanordnung (11) aufweisen;
einen ersten Aktuator (8) zum Beaufschlagen des ersten Lamellenpakets (25), wobei der erste Aktuator (8) außerhalb des Kupplungskorbs (22) angeordnet ist und an der Gehäuseanordnung (11) in einer ersten Richtung axial abgestützt ist, wobei ein erstes Kraftübertragungsglied (36) vorgesehen ist, um eine vom Aktuator (8) erzeugte Axialkraft auf das im Kupplungskorb (22) angeordnete erste Lamellenpaket (25) zu übertragen, wobei der erste Deckelabschnitt (32) mehrere umfangsverteilte erste Durchtrittsöffnungen (40) aufweist, durch die sich Nocken (38) des ersten Kraftübertragungsglieds (36) hindurch erstrecken;
einen zweiten Aktuator (9) zum Beaufschlagen des zweiten Lamellenpakets (26), wobei der zweite Aktuator (9) außerhalb des Kupplungskorbs (22) angeordnet ist und an der Gehäuseanordnung (11) in einer zweiten Richtung axial abgestützt ist, wobei ein zweites Kraftübertragungsglied (37) vorgesehen ist, um eine vom Aktuator (9) erzeugte Axialkraft auf das im Kupplungskorb (22) angeordnete zweite Lamellenpaket (26) zu übertragen, wobei der zweite Deckelabschnitt (33) mehrere umfangsverteilte zweite Durchtrittsöffnungen (41) aufweist, durch die sich Nocken (39) des zweiten Kraftübertragungsglieds (37) hindurch erstrecken;
wobei der erste Aktuator (8) und der zweite Aktuator (9) unabhängig voneinander mittels einer Steuereinheit steuerbar sind, so dass ein vom ersten Lamellenpaket (25) auf die erste Kupplungsnabe (23) übertragbares erstes Drehmoment und ein vom zweiten Lamellenpaket (26) auf die zweite Kupplungsnabe (24) übertragbares zweites Drehmoment unabhängig voneinander variabel einstellbar sind.

2. Elektroantrieb nach Anspruch 1,
**dadurch gekennzeichnet, dass** der Kupplungskorb (22) an seiner äußeren Umfangsfläche ein Ringrad (20) aufweist, das mit einem Abtriebsrad (19) der Getriebewelle (15) in Eingriff ist, wobei das Ringrad (20) insbesondere einteilig mit dem Kupplungskorb (22) gestaltet ist, wobei das Ringrad (20) des Kupplungskorbs (22) und das Abtriebsrad (19) der Getriebewelle (15) schrägverzahnt sind.

3. Elektroantrieb nach einem der Ansprüche 1 oder 2,
**dadurch gekennzeichnet, dass** die Getriebeeinheit (4) genau eine Getriebewelle (15) und zwei Zahnradpaarungen aufweist, wobei das Antriebsrad (14) der Motorwelle (10) und das hiermit kämmende Antriebsrad (18) der Getriebewelle (15) eine erste Zahnradpaarung bilden und das Abtriebsrad (19) der Getriebewelle (15) und das hiermit kämmende Ringrad (20) eine zweite Zahnradpaarung bilden.

4. Elektroantrieb nach einem der Ansprüche 1 bis 3,
**dadurch gekennzeichnet, dass** ein Gesamtübersetzungsverhältnis (i) der Getriebeeinheit zwischen 8 und 10 beträgt, wobei insbesondere vorgesehen ist, dass ein erstes Übersetzungsverhältnis der ersten Zahnradpaarung (14, 18) zwischen 3,0 und 4,0 liegt und ein zweites Übersetzungsverhältnis der zweiten Zahnradpaarung (19, 20) zwischen 2,5 und 3,5 liegt.

5. Elektroantrieb nach einem der Ansprüche 1 bis 4,
**dadurch gekennzeichnet, dass** die elektrische Maschine (3) einen größten Radius (R3) aufweist, und dass zwischen der Drehachse (B) der Getriebewelle (15) und der Drehachse (A) der Motorwelle (10) ein radialer Abstand (R15) gebildet ist, der kleiner als das 0,9-fache des größten Radius (R3) ist, insbesondere kleiner als das 0,8-fache des Radius (R3).

6. Elektroantrieb nach einem der Ansprüche 1 bis 5,
**dadurch gekennzeichnet, dass** ein erstes Kupplungslager (29) zur Lagerung des ersten Deckelabschnitts (32) des Kupplungskorbs (22) und ein zweites Kupplungslager (30) zur Lagerung des zweiten Deckelabschnitts (33) des Kupplungskorbs (22) vorgesehen sind, wobei ein Außendurchmesser des ersten Kupplungslagers (29) kleiner ist als ein Innendurchmesser des ersten Aktuators (8) und/oder wobei ein Außendurchmesser des zweiten Kupplungslagers (30) kleiner ist als ein Innendurchmesser des zweiten Aktuators (9).

7. Elektroantrieb nach einem der Ansprüche 1 bis 6,
**dadurch gekennzeichnet, dass** das erste Kupplungslager (29) zumindest teilweise eine axiale Überdeckung mit dem ersten Aktuator (8) aufweist und/ oder dass das zweite Kupplungslager (30) zumindest teilweise eine axiale Überdeckung mit dem zweiten Aktuator (9) aufweist.

8. Elektroantrieb nach einem der Ansprüche 1 bis 7,
**dadurch gekennzeichnet, dass** der erste Aktuator (8) in Form eines hydraulisch betätigbaren Aktuators gestaltet ist und einen ringförmigen ersten Kolben (42) aufweist, der in einer ringförmigen ersten Zylinderkammer (44) der Gehäuseanordnung (11) axial verschiebbar einsitzt, wobei zwischen dem ringförmigen ersten Kolben (42) und dem ersten Kraftübertragungsglied (36) ein erstes Axiallager (46) angeordnet ist, und/oder dass der zweite Aktuator (9) in Form eines hydraulisch betätigbaren Aktuators gestaltet ist und einen ringförmigen zweiten Kolben (43) aufweist, der in einer ringförmigen zweiten Zylinderkammer (45) der Gehäuseanordnung (11) axial verschiebbar einsitzt, wobei zwischen dem ringförmigen zweiten Kolben (43) und dem zweiten Kraftübertragungsglied (37) ein zweites Axiallager (47) angeordnet ist.

9. Elektroantrieb nach einem der Ansprüche 1 bis 7,
**dadurch gekennzeichnet**, das der erste Aktuator und/oder der zweite Aktuator in Form einer elektromotorisch betätigbaren Rampenanordnung gestaltet ist und einen axial abgestützten Stützring sowie einen axial beweglichen Stellring aufweist, wobei einer der beiden Ringe drehfest in der Gehäuseanordnung gehalten ist und der andere der beiden Ringe drehend antreibbar ist, wobei die beiden Ringe über Rampenflächen gegeneinander axial abgestützt sind, die derart gestaltet sind, dass ein relatives Verdrehen der Ringe eine axiale Verschiebung des Stellrings relativ zum Stützring bewirkt, wobei zwischen dem Stellring und dem zugehörigen Kraftübertragungsglied des Kupplungspakets ein Axiallager angeordnet ist.

10. Elektroantrieb nach einem der Ansprüche 1 bis 9,
**dadurch gekennzeichnet, dass** die Gehäuseanordnung (11) einen ersten Gehäuseabschnitt (53) aufweist, der zumindest teilweise einen ersten Aufnahmeraum für die elektrische Maschine (3) bildet, einen zweiten Gehäuseabschnitt (54), der zumindest teilweise einen zweiten Aufnahmeraum für die Doppelkupplungseinheit (5) bildet, sowie zumindest eine Zwischenwand (55), die zwischen dem ersten Gehäuseabschnitt (53) und dem zweiten Gehäuseabschnitt (54) angeordnet ist,
wobei die Zwischenwand (55) eine erste Lageraufnahmefläche zur Aufnahme eines ersten Wellenlagers (13) für die Motorwelle (10) sowie eine zweite Lageraufnahmefläche zur Aufnahme eines zweiten Wellenlagers (16) für die Getriebewelle (15) aufweist, wobei ein radialer Abstand (E) zwischen der ersten Lageraufnahmefläche und der zweiten Lageraufnahmefläche kleiner als das 2,0-fache der radialen Erstreckung (E13, E16) des ersten und/oder zweiten Wellenlagers (13, 16) ist, insbesondere kleiner als das 1,0-fache der radialen Erstreckung.

11. Elektroantrieb nach Anspruch 10 ,
**dadurch gekennzeichnet, dass** eine Zwischenplatte (52) vorgesehen ist, die zwischen der Zwischenwand (55) und dem zweiten Gehäuseabschnitt (54) angeordnet ist, wobei einer von dem ersten und zweiten Kupplungslager (29, 30) sowie einer von dem ersten und zweiten Aktuator (8, 9) in der Zwischenplatte (52) aufgenommen und gegenüber dieser axial abgestützt sind,
wobei zwischen der Zwischenplatte (52) und der Zwischenwand (55) ein Aufnahmeraum (49) gebildet ist, in dem das Antriebsrad (18) der Getriebewelle (15) angeordnet ist.

12. Elektroantrieb nach einem der Ansprüche 10 oder 11,
**dadurch gekennzeichnet, dass** die Hohlwelle (10) einen mit einem Rotor der elektrischen Maschine (3) verbundenen Wellenabschnitt, einen in der Zwischenwand (55) drehbar gelagerten Lagerabschnitt und das Antriebsrad (14) aufweist, wobei das Antriebsrad (14) in den zwischen der Zwischenwand (55) und der Zwischenplatte (52) gebildeten Aufnahmeraum (49) frei hineinragt.

13. Elektroantrieb nach einem der Ansprüche 11 oder 12,
**dadurch gekennzeichnet, dass** zwischen der Hohlwelle (10) und der sich durch die Hohlwelle erstreckenden Ausgangswelle (28) ein Ringkanal (62) gebildet ist, mit einer der Getriebeeinheit (4) zugewandten ersten Mündung (63) und einer von der Getriebeeinheit (4) entfernten zweiten Mündung (64); wobei die Zwischenplatte (52) der Gehäuseanordnung (10) eine Durchtrittsöffnung (70) aufweist, durch die sich die Ausgangswelle (28) hindurch erstreckt, wobei zwischen der Ausgangswelle (28) und der Zwischenplatte (52) ein Ringspalt (72) gebildet ist, durch den Schmiermittel aus dem Aufnahmeraum der Doppelkupplungseinheit (5) in den Ringkanal (62) fließen kann.

14. Elektroantrieb nach einem der Ansprüche 11 bis 13,
**dadurch gekennzeichnet, dass** die Zwischenplatte (52) einen zur Drehachse (A) koaxialen und sich in axialer Richtung erstreckenden Hülsenansatz (73) aufweist, der in eine stirnseitige Ausnehmung (74) der Hohlwelle (10) mit axialer Überdeckung eingreift.

15. Elektroantrieb nach einem der Ansprüche 1 bis 14,
**dadurch gekennzeichnet, dass** die Ausgangswelle (28) einen von der Getriebeeinheit (4) entfernten zweiten Endabschnitt (38) aufweist, der in einem Lageraufnahmeteil (59) der Gehäuseanordnung (10) mittels eines Wellenlagers (21) um die Drehachse (A) drehbar gelagert ist, wobei sich die Hohlwelle (10) axial bis in das Lageraufnahmeteil (59) hineinerstreckt,
wobei die Hohlwelle (10) mittels einer Drehdichtung (79) gegenüber dem Lageraufnahmeteil (59) abgedichtet ist, wobei die zweite Mündung (64) des Ringkanals (62) axial zwischen der Drehdichtung (79) und dem Wellenlager (21) angeordnet ist.

## Claims

1. Electric drive for driving a driving axle of a motor vehicle, comprising:
a housing assembly (11);
an electric machine (3) having a motor shaft configured as a hollow shaft (10) that is supported in the housing assembly (11) so as to be rotatable around a rotational axis (A);
a transmission unit (4) with a transmission shaft (15) which is rotatingly drivable by the motor shaft (10), and which is supported in the housing assembly (11) so as to be rotatable around a rotational axis (B) parallel to the rotational axis (A) ;
a double clutch unit (5) having a clutch carrier (22) rotatingly drivable by the transmission shaft (15), a first plate package (25) and a first clutch hub (23) for driving a first output shaft (27), as well as a second plate package (26) and a second clutch hub (24) for driving a second output shaft (28), wherein one of the two output shafts extends through the hollow shaft (10) of the electric machine (3);
wherein the clutch carrier (22) is rotatingly supported in the housing assembly (11) coaxially relative to the rotational axis (A) of the motor shaft (10) and comprises a casing portion (31) that forms a receiving chamber for the first and the second plate package, as well as a first cover portion (32) and a second cover portion (33) that laterally delimit the receiving chamber of the clutch carrier (22) and each comprise a sleeve projection (34, 35) for supporting the clutch carrier (22) in the housing assembly (11);
a first actuator (8) for loading the first plate package (25), wherein the first actuator (8) is arranged outside the clutch carrier (22) and is axially supported on the housing assembly (11) in a first direction, wherein a first force transmitting member (36) is provided for transmitting an axial force generated by the actuator (8) to the first plate package (25) arranged in the clutch carrier (22), wherein the first cover portion (32) comprises a plurality of circumferentially distributed first through-apertures (40) through which cams (38) of the first force transmitting member (36) extend;
a second actuator (9) for loading the second plate package (26), wherein the second actuator (9) is arranged outside the clutch carrier (22) and is axially supported on the housing assembly (11) in a second direction, wherein a second force transmitting member (37) is provided for transmitting an axial force generated by the actuator (9) to the second plate package (26) arranged in the clutch carrier (22), wherein the second cover portion (33) comprises a plurality of circumferentially distributed second through-apertures (41) through which cams (39) of the second force transmitting member (37) extend;
wherein the first actuator (8) and the second actuator (9) are controllable independently of one another by a control unit, so that a first torque transmitted from the first plate package (25) to the first clutch hub (23) and a second torque transmitted from the second plate package (26) to the second clutch hub (24) can be variably set independently of one another.

2. Electric drive according to claim 1,
**characterised in that** the clutch carrier (22) on its outer circumference comprises an annular gear (20) that engages an output gear (19) of the transmission shaft (15), wherein the annular (20) gear is configured in particular so as to be integral with the clutch carrier (22), wherein the annular gear (20) of the clutch carrier (22) and the output gear (19) of the transmission shaft (15) comprise helical teeth.

3. Electric drive according to any one of claims 1 or 2,
**characterised in that** the transmission unit (4) comprises exactly one transmission shaft (15) and two pairs of gears, wherein the input gear (14) of the motor shaft (10) and the input gear (18) of the motor shaft (15) engaging therewith form a first gear pair, and the output gear (19) of the transmission shaft (15) and the annular gear (20) engaging therewith form a second gear pair.

4. Electric drive according to any one of claims 1 to 3,
**characterised in that** a total transmission ratio (i) of the transmission unit is between 8 and 10, wherein it is provided in particular that a first transmission ratio of the first gear pair (14, 18) is between 3.0 and 4.0 and a second transmission ratio of the second gear pair (19, 20) is between 2.5 and 3.5.

5. Electric drive according to any one of claims 1 to 4,
**characterised in that** the electric machine (3) comprises a greatest radius (R3) and that between the rotational axis (B) of the transmission shaft (15) and the rotational axis (A) of the motor shaft (10) a radial distance (R15) is formed that is smaller than 0.9 times the greatest radius (R3), in particular smaller than 0.8 times the radius (R3).

6. Electric drive according to any one of claims 1 to 5,
**characterised in that** there is provided a first clutch bearing (29) for supporting the first cover portion (32) of the cutch carrier (22) and a second clutch bearing (30) for supporting the second cover portion (33) of the clutch carrier (22), wherein an outer diameter of the first clutch bearing (29) is smaller than an inner diameter of the first actuator (8) and/or wherein an outer diameter of the second clutch bearing (30) is smaller than an inner diameter of the second actuator (9) .

7. Electric drive according to any one of claims 1 to 6,
**characterised in that** the first clutch bearing (29) at least partially comprises an axial overlap with the first actuator (8) and/or that the second clutch bearing (30) at least partially comprises an axial overlap with the second actuator (9) .

8. Electric drive according to any one of claims 1 to 7,
**characterised in that** the first actuator (8) is configured in the form of a hydraulically operable actuator and comprises an annular first piston (42) which is axially movably positioned in an annular first cylinder chamber (44) of the housing assembly (11), wherein between the annular first piston (42) and the first force transmitting member (36) a first axial bearing (46) is arranged, and/or
that the second actuator (9) is configured in the form of a hydraulically operatable actuator and comprises an annular second piston (43) which is axially movably positioned in an annular second cylinder chamber (45) of the housing assembly, wherein between the annular second piston (43) and the second force transmitting member (37) a second axial bearing (47) is arranged.

9. Electric drive according to any one of claims 1 to 7,
**characterised in that** the first actuator and/or the second actuator are configured in the form of an electromagnetically operable ramp assembly and comprises an axially supported supporting ring as well as an axially movable setting ring, wherein one of the two rings is held in a rotationally fixed way in the housing assembly, with the other one of the two rings being rotatingly drivable, wherein the two rings are axially supported against each other via ramp faces that are configured such that a relative rotation of the rings results in an axial displacement of the setting ring relative to the supporting ring, wherein an axial bearing is arranged between the setting ring and the associated force transmitting member of the clutch package.

10. Electric drive according to any one of claims 1 to 9, **characterised in that** the housing assembly (11) comprises a first housing portion (53) which at least partially forms a first receiving chamber for the electric machine (3), a second housing portion (54) which at least partially forms a second receiving chamber for the double clutch unit (5), as well as at least one intermediate wall (55) that is arranged between the first housing portion (53) and the second housing portion (54),
wherein the intermediate wall (55) comprises a first bearing receiving face for receiving a first shaft bearing (13) for the motor shaft (10), as well as a second bearing receiving face for receiving a second shaft bearing (16) for the transmission shaft (15), wherein a radial distance (E) between the first bearing receiving face and the second bearing receiving face is smaller than 2.0 times the radial extension (E13, E16) of the first and/or the second shaft bearing (13, 16), in particular smaller than 1.0 times the radial extension.

11. Electric drive according to claim 10,
**characterised in that** an intermediate plate (52) is provided that is arranged between the intermediate wall (55) and the second housing portion (54), wherein one of the first and the second clutch bearing (29, 30) as well as one of the first and the second actuator (8, 9) is received in the intermediate plate (52) and is axially supported against same,
wherein between the intermediate plate (52) and the intermediate wall (55) a receiving chamber (49) is formed in which the driving gear (18) of the transmission shaft (15) is arranged.

12. Electric drive according to one of claims 10 or 11,
**characterised in that** the hollow shaft (10) comprises a shaft portion connected to a rotor of the electric machine (3), a bearing portion rotatably supported in the intermediate wall (55), and the driving gear (14), wherein the driving gear (14) freely projects into the receiving chamber (49) formed between the intermediate wall (55) and the intermediate plate (52).

13. Electric drive according to one of claims 11 or 12,
**characterised in that** between the hollow shaft (10) and the output shaft (28) extending through the hollow shaft there is formed an annular channel (62) having a first mouth (63) facing the transmission unit (4) and a second mouth (64) distant from the transmission unit (4);
wherein the intermediate plate (52) of the housing assembly (10) comprises a through-aperture (70) through which the output shaft (28) extends, wherein between the output shaft (28) and the intermediate plate (52) there is formed an annular gap (72) through which lubricant can flow from the receiving chamber of the double clutch unit (5) into the annular channel (62).

14. Electric drive according to any one of claims 11 to 13,
**characterised in that** the intermediate plate (52) comprises a sleeve projection (73) coaxially to the rotational axis (A) and extending in the axial direction, which engages an end recess (74) of the hollow shaft (10) with an axial overlap.

15. Electric drive according to any one of claims 1 to 14,
**characterised in that** the output shaft (28) comprises a second end portion (38) which is remote from the transmission unit (4) and which is supported in a bearing receiving part (59) of the housing assembly (10) by means of a shaft bearing (21) so as to be rotatable around the rotational axis (A), wherein the hollow shaft (10) extends axially into the bearing receiving part (59),
wherein the hollow shaft (10) is sealed by a rotary seal (79) relative to the bearing receiving part (59), wherein the second mouth (64) of the annular channel (62) is arranged axially between the rotational seal (79) and the shaft bearing (21) .

## Revendications

1. Entraînement électrique pour entraîner un axe d'entraînement d'un véhicule automobile, comprenant :
un agencement de boîtier (11) ;
une machine électrique (3) comprenant un arbre moteur formé en tant qu'arbre creux (10) qui est disposé rotatif sur un pivot (A) dans l'agencement de boîtier (11) ;
une unité de transmission (4) comprenant un arbre de transmission (15) qui peut être entraîné en rotation par l'arbre moteur (10) et est disposé dans l'agencement de boîtier (11) en étant rotatif sur un pivot (B) parallèle à l'axe (A) ;
une unité de couplage double (5) avec une cage de couplage (22) pouvant être entraînée en rotation par l'arbre de transmission (15), un premier paquet de lamelles (25) et un premier moyeu de couplage (23) pour entraîner un premier arbre de sortie (27) ainsi qu'un second paquet de lamelles (26) et un second moyeu de couplage (24) pour entraîner un second arbre de sortie (28), dans lequel un des deux arbres de sortie s'étend au travers de l'arbre creux (10) de la machine électrique (3) ;
dans lequel la cage de couplage (22) est positionnée rotative coaxialement au pivot (A) de l'arbre moteur (10) dans l'agencement de boîtier (11) et présente un tronçon d'enveloppe (31) qui forme un espace de réception pour les premier et second paquets de lamelles, ainsi qu'un premier tronçon de couvercle (32) et un second tronçon de couvercle (33) qui délimitent latéralement l'espace de réception de la cage de couplage (22) et présentent respectivement un épaulement à manchon (34, 35) pour l'appui de la cage de couplage (22) dans l'agencement de boîtier (11) ;
un premier déclencheur (8) pour alimenter le premier paquet de lamelles (25), dans lequel le premier déclencheur (8) est disposé en-dehors de la cage de couplage (22) et est appuyé axialement dans une première direction contre l'agencement de boîtier (11), dans lequel un premier membre de transmission de force (36) est prévu pour transmettre une force axiale produite par le déclencheur (8) sur le premier paquet de lamelles (25) disposé dans la cage de couplage (22), dans lequel le premier tronçon de couvercle (32) présente plusieurs premières ouvertures de passage (40) réparties sur le pourtour, à travers lesquelles des cales (38) du premier membre de transmission de force (36) passent ;
un second déclencheur (9) pour alimenter le second paquet de lamelles (26), dans lequel le second déclencheur (9) est disposé en-dehors de la cage de couplage (22) et est appuyé axialement dans une seconde direction contre l'agencement de boîtier (11), dans lequel un second membre de transmission de force (37) est prévu pour transmettre une force axiale produite par le déclencheur (9) sur le second paquet de lamelles (26) disposé dans la cage de couplage (22), dans lequel le second tronçon de couvercle (33) présente plusieurs secondes ouvertures de passage (41) réparties sur le pourtour, à travers lesquelles des cales (39) du second membre de transmission de force (37) passent ;
dans lequel le premier déclencheur (8) et le second déclencheur (9) peuvent être commandés indépendamment l'un de l'autre au moyen d'une unité de commande, de sorte qu'un premier couple de rotation pouvant être transmis du premier paquet de lamelles (25) au premier moyeu de couplage (23), et un second couple de rotation pouvant être transmis du second paquet de lamelles (26) au second moyen de couplage (24) puissent être réglés de façon variable indépendamment l'un de l'autre.

2. Entraînement électrique selon la revendication 1,
**caractérisé en ce que** la cage de couplage (22) présente une couronne dentée (20) sur son pourtour extérieur, qui est en prise avec un pignon entraîné (19) de l'arbre de transmission (15), dans lequel la couronne dentée (20) est conçue en particulier d'une seule pièce avec la cage de couplage (22), dans lequel la couronne dentée (20) de la cage de couplage (22) et le pignon entraîné (19) de l'arbre de transmission (15) sont à denture hélicoïdale.

3. Entraînement électrique selon l'une des revendications 1 ou 2,
**caractérisé en ce que** l'unité de transmission (4) présente précisément un arbre de transmission (15) et deux accouplement de roues dentées, dans lequel le pignon entraîneur (14) de l'arbre moteur (10) et la roue d'entraînement (18) de l'arbre de transmission (15) qui s'engrène avec celui-ci forment un premier accouplement de roues dentées et le pignon entraîné (19) de l'arbre de transmission (15) et la couronne dentée (20) qui s'engrène avec celui-ci forment un second accouplement de roues dentées.

4. Entraînement électrique selon l'une des revendications 1 à 3,
**caractérisé en ce qu'**un rapport de translation total (i) de l'unité d'entraînement fait entre 8 et 10, dans lequel il est prévu en particulier qu'un premier rapport de translation du premier accouplement de roues dentées (14, 18) fasse entre 3 et 4 et un second rapport de translation du second accouplement de roues dentées (19, 20) fasse entre 2,5 et 3,5.

5. Entraînement électrique selon l'une des revendications 1 à 4,
**caractérisé en ce que** la machine électrique (3) présente un plus grand rayon (R3) et qu'entre le pivot (B) de l'arbre de transmission (15) et le pivot (A) de l'arbre moteur (10), un écart radial (R15) est formé qui est inférieur à 0,9 fois le plus grand rayon (R3), en particulier inférieur à 0,8 fois le rayon (R3).

6. Entraînement électrique selon l'une des revendications 1 à 5,
**caractérisé en ce qu'**un premier palier de couplage (29) pour appuyer le premier tronçon de couvercle (32) de la cage de couplage (22) et un second palier de couplage (30) pour appuyer le second tronçon de couvercle (33) de la cage de couplage (22) sont prévus, dans lequel un diamètre extérieur du premier palier de couplage (29) est plus petit qu'un diamètre intérieur du premier déclencheur (8) et/ou dans lequel un diamètre extérieur du second palier de couplage (30) est inférieur à un diamètre intérieur du second déclencheur (9).

7. Entraînement électrique selon l'une des revendications 1 à 6,
**caractérisé en ce que** le premier palier de couplage (29) présente au moins partiellement un recouvrement axial avec le premier déclencheur (8) et/ou le second palier de couplage (30) présente au moins partiellement un recouvrement axial avec le second déclencheur (9).

8. Entraînement électrique selon l'une des revendications 1 à 7,
**caractérisé en ce que** le premier déclencheur (8) est conçu sous forme d'un déclencheur pouvant être actionné hydrauliquement et présente un premier piston annulaire (42) qui est logé en étant mobile axialement dans une première chambre de cylindre annulaire (44) de l'agencement de boîtier (11), dans lequel entre le premier piston annulaire (42) et le premier membre de transmission de force (36), un premier palier axial (46) est disposé, et/ou
**que** le second déclencheur (9) est conçu sous forme d'un déclencheur pouvant être actionné hydrauliquement et présente un second piston annulaire (43) qui est logé en étant mobile axialement dans une seconde chambre de cylindre annulaire (45) de l'agencement de boîtier (11), dans lequel entre le second piston annulaire (43) et le second membre de transmission de force (37), un second palier axial (47) est disposé.

9. Entraînement électrique selon l'une des revendications 1 à 7,
**caractérisé en ce que** le premier déclencheur et/ou le second déclencheur est conçu sous forme d'un agencement de rampe pouvant être actionné par moteur électrique et présente une bague d'appui appuyée axialement ainsi qu'une bague de réglage mobile axialement, dans lequel une des deux bagues est maintenue fixe en rotation dans l'agencement de boîtier et l'autre des deux bagues peut être entraînée en rotation, dans lequel les deux bagues sont appuyées axialement l'une contre l'autre par des surfaces de rampe qui sont formées de sorte qu'une rotation relative des bagues produit un déplacement axial de la bague de réglage par rapport à la bague d'appui, dans lequel un palier axial est disposé entre la bague de réglage et le membre de transmission de force du paquet de couplage qui en fait partie.

10. Entraînement électrique selon l'une des revendications 1 à 9,
**caractérisé en ce que** l'agencement de boîtier (11) présente un premier tronçon de boîtier (53) qui forme au moins partiellement un premier espace de réception pour la machine électrique (3), un second tronçon de boîtier (54) qui forme au moins partiellement un second espace de réception pour l'unité de couplage double (5) ainsi qu'au moins une paroi intermédiaire (55) qui est disposée entre le premier tronçon de boîtier (53) et le second tronçon de boîtier (54), dans lequel la paroi intermédiaire (55) présente une première surface de réception de palier pour recevoir un premier palier d'arbre (13) pour l'arbre moteur (10) ainsi qu'une seconde surface de réception de palier pour recevoir un second palier d'arbre (16) pour l'arbre de transmission (15), dans lequel un écart radial (E) entre la première surface de réception de palier et la seconde surface de réception de palier est inférieur à 2 fois l'allongement radial (E13, E16) du premier et/ou du second palier d'arbre (13, 16), en particulier est inférieur à 1 fois l'allongement radial.

11. Entraînement électrique selon la revendication 10,
**caractérisé en ce qu'**une plaque intermédiaire (52) est prévue, qui est disposée entre la paroi intermédiaire (55) et le second tronçon de boîtier (54), dans lequel un des premier et second paliers de couplage (29, 30) ainsi qu'un des premier et second déclencheurs (8, 9) sont reçus dans la plaque intermédiaire (52) et sont appuyés axialement contre celle-ci,
dans lequel entre la plaque intermédiaire (52) et la paroi intermédiaire (55), il est formé un espace de réception (49) dans lequel est disposée la roue d'entraînement (18) de l'arbre de transmission (15).

12. Entraînement électrique selon l'une des revendications 10 ou 11,
**caractérisé en ce qu'**entre l'arbre creux (10) présente un tronçon d'arbre relié à un rotor de la machine électrique (3), un tronçon de palier disposé rotatif dans la paroi intermédiaire (55) et la roue d'entraînement (14), dans lequel la roue d'entraînement (14) pénètre librement dans l'espace de réception (49) formé entre la paroi intermédiaire (55) et la plaque intermédiaire (52).

13. Entraînement électrique selon l'une des revendications 11 ou 12,
**caractérisé en ce qu'**entre l'arbre creux (10) et l'arbre de sortie (28) s'étendant à travers l'arbre creux, un canal annulaire (62) est formé avec un premier orifice (63) tourné vers l'unité de transmission (4) et un second orifice (64) distant de l'unité de transmission (4) ;
dans lequel la plaque intermédiaire (52) de l'agencement de boîtier (10) présente une ouverture de passage (70) à travers laquelle l'arbre de sortie (28) s'étend, dans lequel entre l'arbre de sortie (28) et la plaque intermédiaire (52), une fente annulaire (72) est formée à travers laquelle du lubrifiant peut circuler de l'espace de réception de l'unité de couplage double (5) vers le canal annulaire (62).

14. Entraînement électrique selon l'une des revendications 11 à 13,
**caractérisé en ce que** la plaque intermédiaire (52) présente un épaulement à manchon (73) coaxial au pivot (A) et s'étendant dans la direction axiale, qui se met en prise dans un évidement frontal (74) de l'arbre creux (10) avec recouvrement axial.

15. Entraînement électrique selon l'une des revendications 1 à 14,
**caractérisé en ce que** l'arbre de sortie (28) présente un second tronçon d'extrémité (38) distant de l'unité de transmission (4) qui est disposé rotatif sur le pivot (A) dans une partie de réception de palier (59) de l'agencement de boîtier (10) au moyen d'un palier d'arbre (21), dans lequel l'arbre creux (10) s'étend jusque dans la partie de réception de palier (59), dans lequel l'arbre creux (10) est étanchéifié par rapport à la partie de réception de palier (59) par le biais d'un joint tournant (79), dans lequel le second orifice (64) du canal annulaire (62) est disposé axialement entre le joint tournant (79) et le palier d'arbre (21).
